# EUROPEAN PATENT APPLICATION

(11) **EP 4 682 204 A1**
(43) Date of publication of application: **21.01.2026**
(21) Application number: 24770320.0
(22) Date of filing: 08.02.2024
(51) Int. Cl.: C08L 71/02, C08K 5/057, C08K 5/19, C08L 33/06

(54) **CURABLE COMPOSITION**

(30) Priority: 13.03.2023 JP 2023038459
(71) Applicant: Kaneka Corporation, Osaka-shi, Osaka 530-8288 (JP)
(72) Inventor: KUBOTA, Nodoka, Hyogo 676-8688 (JP); HASHIMOTO, Takahiro, Hyogo 676-8688 (JP); WAKABAYASHI, Katsuyu, Hyogo 676-8688 (JP)
(74) Representative: Vossius & Partner Patentanwälte Rechtsanwälte mbB
(86) International application number: PCT/JP2024/004277
(87) International publication number: WO 2024/190202

(57) **Abstract**

A curable composition contains a polyoxyalkylene polymer (A) having a reactive silicon group, a (meth)acrylic ester polymer (B) having a reactive silicon group, and a curing catalyst (C). The reactive silicon group of the polymer (A) has a structure in which three hydrolyzable groups are bonded to one silicon atom, and the reactive silicon group of the polymer (B) has a structure in which two hydrolyzable groups are bonded to one silicon atom. The curing catalyst (C) contains a metal alkoxide (C1) and an ammonium hydroxide (C2) or contains a reaction product of the metal alkoxide (C1) and the ammonium hydroxide (C2).

## Description

### Technical Field

The present invention relates to a curable composition containing a reactive silicon group-containing polymer.

### Background Art

A polymer that has a silicon-containing group having a hydroxy or hydrolyzable group on a silicon atom and capable of forming a siloxane bond (this silicon-containing group will be hereinafter referred to as a "reactive silicon group") is known as a moisture-reactive polymer. Polymers of this kind are contained in many industrial products such as adhesives, sealing materials, coating materials, paints, and pressure-sensitive adhesives and used in diverse fields.

Reactive silicon groups include those having a structure in which three hydrolyzable groups are bonded to one silicon atom (e.g., trialkoxysilyl groups) and those having a structure in which two hydrolyzable groups are bonded to one silicon atom (e.g., dialkoxysilyl groups). In general, silicon groups having three hydrolyzable groups are known to have higher activity and offer higher curing speed than silicon groups having two hydrolyzable groups (see paragraph [0019] of Patent Literature 2, for example).

Among polymers having such reactive silicon groups, there are reactive silicon group-containing polyoxyalkylene polymers. Patent Literature 1 is directed to a technique for improving the weathering resistance or adhesive properties of such polyoxyalkylene polymers and proposes a curable composition containing a combination of a reactive silicon group-containing polyoxyalkylene polymer and a reactive silicon group-containing (meth)acrylic ester polymer.

In the absence of any curing catalyst, a reactive silicon group-containing polymer remains stable for a long period of time without any reaction of the silicon groups even when present together with water. Upon being mixed with a curing catalyst, the polymer begins to undergo a curing reaction. In many conventional cases, an organotin catalyst having a carbon-tin bond is used as the curing catalyst. However, organotin catalysts have raised concern due to their toxicity to living organisms, and there is often a need for other catalysts to replace them.

For example, a curing catalyst other than tin catalysts is disclosed in Patent

Literature 2 or 3. The curing catalyst contains a combination of a metal alkoxide and an ammonium hydroxide, and the literatures teach that the use of this curing catalyst can significantly increase the curing speed of reactive silicon group-containing polymers.

### Citation List

### Patent Literature

PTL 1: Japanese Laid-Open Patent Application Publication No. S63-112642
PTL 2: WO 2021/106942 A1
PTL 3: WO 2021/106943 A1

### Summary of Invention

### Technical Problem

In the case where the catalyst disclosed in Patent Literature 2 or 3 is used as a curing catalyst for a curable composition containing both a reactive silicon group-containing polyoxyalkylene polymer and a reactive silicon group-containing (meth)acrylic ester polymer, gels could be formed and cause poor appearance of the cured product. In addition, the curing time could vary across the surface of the curable composition, and the composition could remain uncured for a long time or end up being sticky. There is a desire to cure the curable composition in a short time without the formation of any gels.

In view of the above circumstances, the present invention aims to provide a curable composition containing a reactive silicon group-containing polyoxyalkylene polymer and a reactive silicon group-containing (meth)acrylic ester polymer, the curable composition being adapted to cure in a short time without requiring any tin catalyst as a curing catalyst and without being affected by the formation of gels.

### Solution to Problem

In an effort to solve the problem as described above, the present inventors have obtained the following finding about a curable composition containing a reactive silicon group-containing polyoxyalkylene polymer, a reactive silicon group-containing (meth)acrylic ester polymer, and a specific type of tin-free catalyst: when the polyoxyalkylene polymer has a silicon group having three hydrolyzable groups and the (meth)acrylic ester polymer has a silicon group having two hydrolyzable groups, the curable composition can cure in a short time without requiring any tin catalyst as a curing catalyst and without being affected by the formation of gels. Based on this finding, the inventors have completed the present invention.

Specifically, the present invention relates to a curable composition containing:
a polyoxyalkylene polymer (A) having a reactive silicon group;
a (meth)acrylic ester polymer (B) having a reactive silicon group; and
a curing catalyst (C), wherein
the reactive silicon group of the polymer (A) has a structure in which three hydrolyzable groups are bonded to one silicon atom, the structure being represented by the following formula (1): -SiX₃ (1), wherein X groups are each independently a hydrolyzable group,
the reactive silicon group of the polymer (B) has a structure in which two hydrolyzable groups are bonded to one silicon atom, the structure being represented by the following formula (2): -SiR²Z₂ (2), wherein R² is a hydrocarbon group having 1 to 20 carbon atoms, the hydrocarbon group optionally has a heteroatom-containing group, and Z groups are each independently a hydrolyzable group, and
the curing catalyst (C) contains a metal alkoxide (C1) and an ammonium hydroxide (C2) or contains a reaction product of the metal alkoxide (C1) and the ammonium hydroxide (C2).

### Advantageous Effects of Invention

The present invention can provide a curable composition containing a reactive silicon group-containing polyoxyalkylene polymer and a reactive silicon group-containing (meth)acrylic ester polymer, the curable composition being adapted to cure in a short time without requiring any tin catalyst as a curing catalyst and without being affected by the formation of gels.

The present invention can further provide a curable composition that experiences little increase in viscosity over time and has good handleability.

### Description of Embodiments

Hereinafter, an embodiment of the present invention will be described.

A curable composition according to the present disclosure contains reactive silicon group-containing polymers, which include both a polyoxyalkylene polymer (A) having a reactive silicon group (hereinafter also referred to as a reactive silicon group-containing polyoxyalkylene polymer (A) or a polymer (A)) and a (meth)acrylic ester polymer (B) having a reactive silicon group (hereinafter also referred to as a reactive silicon group-containing (meth)acrylic ester polymer (B) or a polymer (B)).

### <<Reactive Silicon Group-Containing Polyoxyalkylene Polymer (A)>>

### <Reactive Silicon Group>

The reactive silicon group of the polymer (A) has a structure in which three hydrolyzable groups are bonded to one silicon atom, and can be represented by the following formula (1).

-SiX₃ (1)

In this formula, the X groups are each independently a hydrolyzable group. Thanks to the polymer (A) having a reactive silicon group with a specific structure as shown above, the curable composition according to the present disclosure can exhibit good curability.

Examples of X include a hydroxy group, halogens, and alkoxy, acyloxy, ketoximate, amino, amide, acid amide, aminooxy, mercapto, and alkenyloxy groups. Among these, alkoxy groups are more preferred in terms of moderate hydrolyzability and ease of handling. Methoxy and ethoxy groups are even more preferred. Particularly preferred is a methoxy group.

Specific examples of the reactive silicon group represented by the formula (1) include, but are not limited to, trimethoxysilyl, triethoxysilyl, tris(2-propenyloxy)silyl, and triacetoxysilyl groups. Among these, trialkoxysilyl groups are preferred in terms of improvement in curability. Trimethoxysilyl and triethoxysilyl groups are more preferred. Particularly preferred is a trimethoxysilyl group.

In terms of the balance of flexibility and recovery performance, the number of the reactive silicon groups per molecule of the polymer (A) is preferably from 1 to 7, more preferably from 1.1 to 3.4, and particularly preferably from 1.2 to 2.6 on average.

To obtain a rubber-like cured product of good quality, the reactive silicon group of the polymer (A) is preferably located at an end of the main chain of the polymer (A). To allow the polymer (A) to have good curability and exhibit a rubber elastic behavior, the number of the reactive silicon groups is preferably 0.5 or more, more preferably 0.6 or more, even more preferably 0.7 or more, and particularly preferably 0.8 or more on average per end of the polymer (A).

As taught in WO 2013/180203 A1 or Japanese Laid-Open Patent Application

Publication No. 2021-75722, when a polyoxyalkylene polymer having two or more olefin groups at an end of the main chain is used as an intermediate to obtain the polymer (A), the polymer (A) obtained can have more than 1.0 reactive silicon groups on average per end. The use of such a polymer (A) enables the resulting cured product to achieve excellent physical properties.

### <Main Chain Structure>

The main chain structure of the polymer (A) may be linear or branched.

The main chain of the polymer (A) is composed of repeating units represented by -R¹-O- (wherein R¹ is a linear or branched alkylene group having 1 to 14 carbon atoms). R¹ is preferably a linear or branched alkylene group having 2 to 4 carbon atoms. Specific examples of the repeating units represented by -R¹-O- include -CH₂O-, -CH₂CH₂O-, -CH₂CH(CH₃)O-, -CH₂C(CH₃)(CH₃)O-, and -CH₂CH₂CH₂CH₂O-, among which preferred are -CH₂CH₂O- and -CH₂CH(CH₃)O-. More preferred is -CH₂CH(CH₃)O-.

The number-average molecular weight of the polymer (A) is not limited to a particular range. When expressed as a polystyrene-equivalent molecular weight determined by GPC analysis, the number-average molecular weight is preferably from 5,000 to 100,000, more preferably from 10,000 to 50,000, particularly preferably from 12,000 to 40,000, and most preferably from 13,000 to 30,000. When the number-average molecular weight is in the above range, the amount of the reactive silicon group to be introduced is moderate, and this makes it easier to obtain the reactive silicon group-containing polyoxyalkylene polymer (A) with high strength while controlling the production cost in a desired range.

The molecular weight of the reactive silicon group-containing polyoxyalkylene polymer (A) can be expressed also as an end group-equivalent molecular weight, which is determined as follows: before reactive silicon group introduction, a polymer precursor is subjected to titration analysis based on the principles of the hydroxy value measurement method as specified in JIS K 1557 and the iodine value measurement method as specified in JIS K 0070 to directly measure the end group concentration, from which the end group-equivalent molecular weight is calculated taking into account the architecture of the polymer (the degree of branching which depends on the polymerization initiator used). The end group-equivalent molecular weight of the polymer (A) can be determined also by creating a calibration curve representing the relationship between the number-average molecular weight of the polymer precursor as determined by ordinary GPC analysis and the end group-equivalent molecular weight, determining the number-average molecular weight of the reactive silicon group-containing polymer by GPC analysis, and converting the determined number-average molecular weight to the end group-equivalent molecular weight based on the calibration curve.

The reactive silicon group-containing polyoxyalkylene polymer (A) is not limited to having a particular molecular weight distribution (dispersity Mw/Mn), but preferably has a narrow molecular weight distribution. Specifically, the dispersity (Mw/Mn) is preferably 1.6 or less, more preferably 1.4 or less, even more preferably 1.3 or less, and particularly preferably 1.2 or less. The reactive silicon group-containing polyoxyalkylene polymer (A) having a dispersity in the above range is preferred in terms of adhesive properties and workability such as ease of handling. The dispersity of the reactive silicon group-containing polyoxyalkylene polymer (A) can be determined from the number-average and weight-average molecular weights obtained by GPC analysis.

### <Method for Producing Reactive Silicon Group-Containing Polyoxyalkylene Polymer (A)>

The following will describe a method for producing the reactive silicon group-containing polyoxyalkylene polymer (A).

The polymer (A) can be produced by introducing a reactive silicon group into a precursor polymer that can accept the reactive silicon group. Specifically, the polymer (A) can be produced as follows: an olefin group is introduced into a hydroxy-terminated polyoxyalkylene polymer (a1) by making use of the reactivity of the hydroxy group to obtain an olefin group-containing precursor polymer; and the precursor polymer is then reacted with a reactive silicon group-containing compound reactive with the olefin group to introduce a reactive silicon group into the polymer.

### (Polymerization)

The polymer backbone of the polyoxyalkylene polymer can be formed by polymerizing an epoxy compound with a hydroxy group-containing initiator using a conventionally known method. This polymerization gives the hydroxy-terminated polyoxyalkylene polymer (a1). The method for polymerization is not limited to a particular technique. A polymerization method using a double metal cyanide complex catalyst such as a zinc hexacyanocobaltate-glyme complex is preferred to obtain a hydroxy-terminated polymer having a low dispersity (Mw/Mn).

Examples of the hydroxy group-containing initiator include, but are not limited to, ethylene glycol, propylene glycol, glycerin, pentaerythritol, low-molecular-weight polyoxypropylene glycol, low-molecular-weight polyoxypropylene triol, butanol, allyl alcohol, methanol, ethanol, propanol, butanol, pentanol, hexanol, low-molecular-weight polyoxypropylene monoallyl ether, and low-molecular-weight polyoxypropylene monoalkyl ether.

Examples of the epoxy compound include, but are not limited to, alkylene oxides such as ethylene oxide, propylene oxide, methyl glycidyl ether, and butyl glycidyl ether. Propylene oxide is preferred.

### (Reaction with Alkali Metal Salt)

In introduction of an olefin group into the hydroxy-terminated polyoxyalkylene polymer (a1), it is preferable to first convert the terminal hydroxy group to an alkoxide group by allowing an alkali metal salt to act on the polyoxyalkylene polymer (a1). A double metal cyanide complex catalyst may be used instead of the alkali metal salt. This reaction results in the formation of an alkoxide-terminated polyoxyalkylene polymer (a2).

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. In terms of ease of handling and solubility, sodium hydroxide, sodium methoxide, sodium ethoxide, sodium tert-butoxide, potassium hydroxide, potassium methoxide, potassium ethoxide, and potassium tert-butoxide are preferred, and more preferred are sodium methoxide and sodium tert-butoxide. In terms of availability, sodium methoxide is preferred. The alkali metal salt dissolved in a solvent may be used in the reaction.

### (Reaction with Electrophile (a3))

An olefin group-containing electrophile (a3) is allowed to act on the alkoxide-terminated polyoxyalkylene polymer (a2) obtained as described above; thus, the terminal alkoxide structure can be converted to a structure containing an olefin group. This reaction results in the formation of a polyoxyalkylene polymer (a4) having a terminal structure containing the olefin group.

The olefin group-containing electrophile (a3) is not limited to a particular compound and may be any compound that can react with the terminal alkoxide structure of the polyoxyalkylene polymer (a2) to introduce an olefin group into the polyoxyalkylene polymer. An example of the electrophile (a3) is an olefin group-containing organic halogenated compound (a3-1).

Specific examples of the olefin group-containing organic halogenated compound (a3-1) include, but are not limited to, vinyl chloride, allyl chloride, methallyl chloride, vinyl bromide, allyl bromide, methallyl bromide, vinyl iodide, allyl iodide, and methallyl iodide. In terms of ease of handling, allyl chloride and methallyl chloride are preferred. Methallyl chloride, methallyl bromide, and methallyl iodide are preferred to increase the average ratio of the number of the reactive silicon groups to the number of the ends of the polymer backbone.

### (Introduction of Reactive Silicon Group)

After the polyoxyalkylene polymer (a4) (precursor polymer) having a terminal structure containing an olefin group is obtained as described above, the precursor polymer is subjected to a hydrosilylation reaction with a reactive silicon group-containing hydrosilane compound (a5). By the hydrosilylation reaction, a reactive silicon group can be introduced into the polymer. As a result, the reactive silicon group-containing polyoxyalkylene polymer (A) is produced. The hydrosilylation reaction is advantageous in that the reaction is easy to carry out, that the amount of the reactive silicon group to be introduced can be easily adjusted, and that the resulting polymer has stable physical properties.

Specific examples of the reactive silicon group-containing hydrosilane compound (a5) include: halosilanes such as trichlorosilane; alkoxysilanes such as trimethoxysilane and triethoxysilane; and isopropenyloxy silanes (acetone-free type) such as triisopropenyloxysilane.

The hydrosilylation reaction is preferably carried out in the presence of a hydrosilylation catalyst to accelerate the reaction. Known examples of the hydrosilylation catalyst include metals such as cobalt, nickel, iridium, platinum, palladium, rhodium, and ruthenium and complexes of these metals, and any of them can be used in the hydrosilylation reaction. Specific examples of the catalyst include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinylsiloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄. Platinum catalysts such as chloroplatinic acid and platinum-vinylsiloxane complexes are preferred in terms of reaction efficiency.

Another method that can be used to produce the polymer (A) is a method in which a compound (a6) having a reactive silicon group and an isocyanate group in the molecule is allowed to act on the hydroxy-terminated polyoxyalkylene polymer (al) (precursor polymer) to form a urethane bond and introduce the reactive silicon group into the polyoxyalkylene polymer. The polymer (A) can be produced also by this method.

The compound (a6) having a reactive silicon group and an isocyanate group in the molecule is not limited to a particular compound and may be any compound that has in the molecule both a reactive silicon group and an isocyanate group capable of a urethanization reaction with the hydroxy group of the polyoxyalkylene polymer (a1). Specific examples of the compound (a6) include (3-isocyanatopropyl)trimethoxysilane, (3-isocyanatopropyl)triethoxysilane, (isocyanatomethyl)trimethoxysilane, and (isocyanatomethyl)triethoxysilane.

The urethanization reaction may be carried out without the use of any urethanization catalyst. In order to increase the reaction speed or reaction percentage, the urethanization reaction may be carried out in the presence of a urethanization catalyst. Examples of urethanization catalysts that can be used include conventionally known urethanization catalysts such as catalysts listed in Polyurethanes: Chemistry and Technology, Part I, Table 30, Chapter 4, Saunders and Frisch, Interscience Publishers, New York, 1963. Specific examples include, but are not limited to, organotin compounds, bismuth compounds, and base catalysts such as organic amines.

Yet another method that can be used to produce the polymer (A) is a method in which the hydroxy-terminated polyoxyalkylene polymer (a1) is reacted with an excessive amount of polyisocyanate compound (a7) to give an isocyanate-terminated polymer (precursor polymer) and then the precursor polymer is reacted with a compound (a8) having a reactive silicon group and a group (such as an amino group) reactive with the isocyanate group of the polymer. The polyoxyalkylene polymer (A) having a reactive silicon group at an end of the polymer backbone can be produced also by this method.

Examples of the polyisocyanate compound (a7) include: aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of the compound (a8) having a reactive silicon group and a group reactive with an isocyanate group include: amino group-containing silanes such as γ-aminopropyltrimethoxysilane, γ-aminopropyltriethoxysilane, *N*-(β-aminoethyl)-γ-aminopropyltrimethoxysilane, *N*-(β-aminoethyl)-γ-aminopropyltriethoxysilane, γ-(*N*-phenyl)aminopropyltrimethoxysilane, *N-*ethylaminoisobutyltrimethoxysilane*,* and *N*-cyclohexylaminomethyltrimethoxysilane; hydroxy group-containing silanes such as γ-hydroxypropyltrimethoxysilane; and mercapto group-containing silanes such as γ-mercaptopropyltrimethoxysilane.

Yet another method that can be used to produce the polymer (A) is a method in which a compound (a9) having a reactive silicon group and a mercaptan group in the molecule is allowed to act on the polyoxyalkylene polymer (a4) (precursor polymer) having a terminal structure containing an olefin group to form a sulfide bond through addition of the mercaptan group to the olefin group and introduce the reactive silicon group into the polyoxyalkylene polymer. The polyoxyalkylene polymer (A) having a reactive silicon group at an end of the polymer backbone can be produced also by this method.

Specific examples of the reactive silicon group-containing polyoxyalkylene polymer (A) include Kaneka Silyl^{™} SAX520, SAX530, SAX580, and SAX590 (all of which are manufactured by Kaneka Corporation).

### <<Reactive Silicon Group-Containing (Meth)Acrylic Ester Polymer (B)>>

The curable composition according to the present disclosure contains a combination of the polyoxyalkylene polymer (A) containing a reactive silicon group having a structure in which three hydrolyzable groups are bonded to one silicon atom and the (meth)acrylic ester polymer (B) containing a reactive silicon group having a structure in which two hydrolyzable groups are bonded to one silicon atom. This combination of the polymers (A) and (B) allows the curable composition to cure in a short time without being affected by the formation of gels.

The reactive silicon group of the polymer (B) has a structure in which two hydrolyzable groups are bonded to one silicon atom, and can be represented by the following formula (2).

-SiR²Z₂ (2)

In this formula, R² is a hydrocarbon group having 1 to 20 carbon atoms, and the hydrocarbon group optionally has a heteroatom-containing group. The Z groups are each independently a hydrolyzable group.

R² is a hydrocarbon group having 1 to 20 carbon atoms. The number of carbon atoms in the hydrocarbon group denoted by R² is preferably from 1 to 12, more preferably from 1 to 6, and particularly preferably from 1 to 4. The hydrocarbon group may be an unsubstituted hydrocarbon group or a substituted hydrocarbon group.

Specific examples of R² include: alkyl groups such as methyl, ethyl, n-propyl, isopropyl, n-butyl, isobutyl, sec-butyl, and *tert*-butyl groups; alkenyl groups such as vinyl, 2-propenyl, and 3-butenyl groups; cycloalkyl groups such as cyclopropyl, cyclobutyl, cyclopentyl, cyclohexyl, and cyclooctyl groups; aryl groups such as phenyl, naphthalen-1-yl, and naphthalen-2-yl groups; and aralkyl groups such as benzyl and phenethyl groups.

Preferred examples of R² include: alkyl groups such as methyl and ethyl groups; cycloalkyl groups such as a cyclohexyl group; aryl groups such as a phenyl group; and aralkyl groups such as a benzyl group. R² is preferably a methyl group or an ethyl group and particularly preferably a methyl group.

Examples of Z include a hydroxy group, halogens, and alkoxy, acyloxy, ketoximate, amino, amide, acid amide, aminooxy, mercapto, and alkenyloxy groups. Among these, alkoxy groups are more preferred in terms of moderate hydrolyzability and ease of handling. Methoxy and ethoxy groups are even more preferred. Particularly preferred is a methoxy group.

Specific examples of the reactive silicon group represented by the formula (2) include, but are not limited to, dimethoxymethylsilyl, diethoxymethylsilyl, and dimethoxyethylsilyl groups. Among these, dialkoxysilyl groups are preferred in terms of improvement in curability, and dimethoxysilyl groups are more preferred. Particularly preferred is a dimethoxymethylsilyl group.

In one aspect of the present embodiment, it is preferable that the reactive silicon group of the polymer (A), which is represented by the formula (1), be a trialkoxysilyl group and the reactive silicon group of the polymer (B), which is represented by the formula (2), be a dialkoxysilyl group. In this case, the alkoxy groups in the reactive silicon group of the polymer (A) and the alkoxy groups in the reactive silicon group of the polymer (B) are preferably the same alkoxy groups. More preferably, both the alkoxy groups in the reactive silicon group of the polymer (A) and the alkoxy groups in the reactive silicon group of the polymer (B) are methoxy groups. In particular, it is preferable that the reactive silicon group of the polymer (A) be a trimethoxysilyl group and the reactive silicon group of the polymer (B) be a dimethoxymethylsilyl group.

### <Main Chain Structure>

The (meth)acrylic ester monomer used to form the main chain of the reactive silicon group-containing (meth)acrylic ester polymer (B) is not limited to a particular compound, and various kinds of (meth)acrylic ester monomers can be used. Specific examples include (meta)acrylic monomers such as methyl (meth)acrylate, ethyl (meth)acrylate, n-propyl (meth)acrylate, isopropyl (meth)acrylate, n-butyl (meth)acrylate, isobutyl (meth)acrylate, *tert-butyl* (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, (3-trimethoxysilyl)propyl (meth)acrylate, (3-dimethoxymethylsilyl)propyl (meth)acrylate, (2-trimethoxysilyl)ethyl (meth)acrylate, (2-dimethoxymethylsilyl)ethyl (meth)acrylate, trimethoxysilylmethyl (meth)acrylate, (dimethoxymethylsilyl)methyl (meth)acrylate, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

Examples of monomers other than the (meta)acrylic monomers listed above include: acrylic acid compounds such as acrylic acid and methacrylic acid; amide-group containing monomers such as N-methylolacrylamide and N-methylolmethacrylamide; epoxy group-containing monomers such as glycidyl acrylate and glycidyl methacrylate; and monomers containing a nitrogen-containing group such as diethylaminoethyl acrylate and diethylaminoethyl methacrylate.

The (meth)acrylic ester polymer (B) used can be a polymer obtained by copolymerization of a (meth)acrylic ester monomer and a vinyl monomer copolymerizable with the (meth)acrylic ester monomer. A plurality of comonomer components may be used to obtain the (meth)acrylic ester polymer (B).

Among (meth)acrylic ester polymers obtained from the monomers as mentioned above, copolymers formed from styrenic monomers or (meth)acrylic monomers are preferred due to their excellent physical properties. (Meth)acrylic ester polymers formed from acrylic ester monomers or methacrylic ester monomers are more preferred, and acrylic ester polymers formed from acrylic ester monomers are particularly preferred.

The number of the reactive silicon groups in the polymer (B) is preferably from 0.5 to 5.0 on average per molecule. In terms of the mechanical properties of a cured product of the curable composition, the number of the reactive silicon groups is more preferably 1.2 or more. In terms of the stability of the polymer (B), the number of the reactive silicon groups is more preferably 3.0 or less.

The method for introducing a reactive silicon group into a (meth)acrylic ester polymer is not limited to a particular technique. For example, the following methods can be used.
(i) A method in which a compound having a polymerizable unsaturated group and a reactive silicon group is copolymerized with any of the monomers described above. With this method, the reactive silicon group tends to be randomly introduced into the main chain of the polymer.
(ii) A method in which a (meth)acrylic ester polymer is produced by polymerization using a reactive silicon group-containing mercaptosilane compound as a chain transfer agent. With this method, the reactive silicon group can be introduced at a polymer end.
(iii) A method in which a compound having a polymerizable unsaturated group and a reactive functional group (V group) is copolymerized and then the resulting copolymer is reacted with a compound having a reactive silicon group and a functional group reactive with the V group. Specific examples of the method (iii) include: a method in which 2-hydroxyethyl acrylate is copolymerized and then the hydroxy group of the resulting copolymer is reacted with an isocyanatosilane having a reactive silicon group; and a method in which glycidyl acrylate is copolymerized and then the epoxy group of the resulting copolymer is reacted with an aminosilane compound having a reactive silicon group.
(iv) A method in which a terminal functional group of a (meth)acrylic ester polymer synthesized by living radical polymerization is modified to introduce a reactive silicon group into the polymer. A (meth)acrylic ester polymer resulting from living radical polymerization permits easy introduction of a functional group at a polymer end. The reactive silicon group can be introduced at the polymer end by modifying the introduced terminal functional group. This method can give a polymer having a low dispersity. The dispersity is preferably 1.6 or less, more preferably 1.4 or less, and even more preferably 1.2 or less.

The following will describe examples of silicon compounds that can be used to introduce the reactive silicon group of the (meth)acrylic ester polymer (B) by any of the above methods. Examples of compounds that can be used as the compound having a polymerizable unsaturated group and a reactive silicon group in the method (i) include 3-(dimethoxymethylsilyl)propyl (meth)acrylate, (dimethoxymethylsilyl)methyl (meth)acrylate, and (diethoxymethylsilyl)methyl (meth)acrylate. In terms of availability, (dimethoxymethylsilyl)propyl (meth)acrylate is particularly preferred.

Examples of compounds that can be used as the mercaptosilane compound having a reactive silicon group in the method (ii) include 3-mercaptopropyldimethoxymethylsilane and (mercaptomethyl)dimethoxymethylsilane.

Examples of compounds that can be used as the compound having a reactive silicon group and a functional group reactive with the V group in the method (iii) include: isocyanatosilane compounds such as 3-isocyanatopropyldimethoxymethylsilane, isocyanatomethyldimethoxymethylsilane, and isocyanatomethyldiethoxymethylsilane; epoxysilane compounds such as 3-glycidoxypropyldimethoxymethylsilane, glycidoxymethyldimethoxymethylsilane, and glycidoxymethyldiethoxymethylsilane; and aminosilane compounds such as 3-aminopropyldimethoxymethylsilane, aminomethyldimethoxymethylsilane, and *N*-cyclohexylaminomethyldiethoxymethylsilane.

In the method (iv), any modification reaction can be used. Examples of modification reaction methods that can be used include: a method using a compound having a silicon group and a functional group reactive with the terminal reactive group resulting from polymerization; and a method in which a double bond is introduced at a polymer end using a double bond-containing compound having a functional group reactive with the terminal reactive group and subsequently a reactive silicon group is introduced at the polymer end through a process such as hydrosilylation.

The methods described above may be used in any combination. For example, the combined use of the method (iii) and the method (ii) allows the resulting polymer (B) to have the reactive silicon group at a molecular chain end, in a side chain, or both at the molecular chain end and in the side chain.

The number-average molecular weight of the polymer (B) is not limited to a particular range. When expressed as a polystyrene-equivalent molecular weight determined by GPC analysis, the number-average molecular weight is preferably from 500 to 100,000, more preferably from 500 to 50,000, and particularly preferably from 1,000 to 30,000.

Methods for blending a polyoxyalkylene polymer and a (meth)acrylic ester polymer are proposed, for example, in Japanese Laid-Open Patent Application Publication No. S59-122541, Japanese Laid-Open Patent Application Publication No. S63-112642, Japanese Laid-Open Patent Application Publication No. H6-172631, and Japanese Laid-Open Patent Application Publication No. H11-116763. An alternative method is to polymerize a (meth)acrylic ester monomer in the presence of a polyoxypropylene polymer having a reactive silicon group. The details of this production method are disclosed in various publications such as Japanese Laid-Open Patent Application Publication No. S59-78223, Japanese Laid-Open Patent Application Publication No. S60-228516, and Japanese Laid-Open Patent Application Publication No. S60-228517. The blending of the polymers (A) and (B) can be, but is not limited to being, accomplished by any of the methods mentioned above.

In terms of improvement in weathering resistance, adhesive properties, and curing speed, the proportions of the polymers (A) and polymer (B) in the curable composition according to the present disclosure are preferably such that the weight ratio (A):(B) is from 95:5 to 5:95, more preferably from 90:10 to 20:80, even more preferably from 85:15 to 40:60, and particularly preferably from 80:20 to 60:40. One polymer (A) may be used alone, or two or polymers (A) may be used in combination. One polymer (B) may be used alone, or two or more polymers (B) may be used in combination.

### <<Curing Catalyst (C)>>

The curable composition according to the present disclosure contains a specific type of curing catalyst (C). The curing catalyst (C) contains a metal alkoxide (C1) and an ammonium hydroxide (C2) or contains a reaction product of the metal alkoxide (C1) and the ammonium hydroxide (C2).

### <Metal Alkoxide (C1)>

Examples of the metal of the metal alkoxide (C1) include, but are not limited to, titanium, aluminum, zirconium, zinc, sodium, potassium, lithium, magnesium, and boron. One of these metals may be used alone, or two or more thereof may be used in combination. Titanium is preferred among others.

The alkoxy group contained in the metal alkoxide (C1) can be represented by R³-O-. In this formula, R³ is a substituted or unsubstituted hydrocarbon group having 1 to 10 carbon atoms.

The substituted or unsubstituted hydrocarbon group denoted by R³ is preferably a substituted or unsubstituted aliphatic or aromatic hydrocarbon group and more preferably an aliphatic hydrocarbon group. The aliphatic hydrocarbon group may be, for example, a saturated or unsaturated hydrocarbon group. The saturated hydrocarbon group is preferably a linear or branched alkyl group. The number of carbon atoms in the hydrocarbon group is from 1 to 10, preferably from 1 to 6, and more preferably from 1 to 4. Examples of the hydrocarbon group include methyl, ethyl, propyl, isopropyl, butyl, isobutyl, *sec*-butyl*, tert*-butyl*,* pentyl, hexyl, heptyl, octyl, 2-ethylhexyl, nonyl, and decyl groups. Examples of the substituent with which the hydrocarbon group may be substituted include methoxy, ethoxy, hydroxy, and acetoxy groups. When there are a plurality of R³ groups, they may be the same or different.

The metal alkoxide (C1) may contain a substituent other than the alkoxy group or a chelate ligand. Examples of the chelate ligand include β-diketones and β-ketoesters. Specific examples of β-diketones will be described later.

A titanium alkoxide that can be used as the metal alkoxide (C1) can be represented by the following formula (3).

(R³-O)ₙTi-A₄₋ₙ (3)

In this formula, R³ is as define above and denotes a substituted or unsubstituted hydrocarbon group having 1 to 10 carbon atoms, n is an integer from 1 to 4, and A is a chelate ligand.

Examples of the chelate ligand denoted by A include: diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; ketoesters such as methyl acetoacetate, ethyl acetoacetate, butyl acetoacetate, t-butyl acetoacetate, and ethyl 3-oxohexanoate; ketoamides such as N,N-dimethylacetoacetamide, N,N-diethylacetoacetamide, and acetoacetanilide; malonic esters such as dimethyl malonate, diethyl malonate, and diphenyl malonate; and malonamides such as N,N,N',N'-tetramethylmalonamide and N,N,N',N'-tetraethylmalonamide. Among these, diketones and ketoamides are preferred and diketones are more preferred. Specifically, 2,4-pentanedione, 1-aryl-1,3-butanediones, 1,3-diaryl-1,3-propanediones, methyl acetoacetate, and ethyl acetoacetate are preferred, and methyl acetoacetate and ethyl acetoacetate are particularly preferred. When there are a plurality of chelate ligands denoted by A, they may be the same or different.

The letter n denotes an integer from 1 to 4. To achieve better curability, n is preferably 2, 3, or 4 and particularly preferably 4.

Specific examples of the titanium alkoxide represented by the formula (3) include tetramethoxytitanium, trimethoxyethoxytitanium, trimethoxyisopropoxytitanium, trimethoxybutoxytitanium, dimethoxydiethoxytitanium, dimethoxydiisopropoxytitanium, dimethoxydibutoxytitanium, methoxytriethoxytitanium, methoxytriisopropoxytitanium, methoxytributoxytitanium, tetraethoxytitanium, triethoxyisopropoxytitanium, triethoxybutoxytitanium, diethoxydiisopropoxytitanium, diethoxydibutoxytitanium, ethoxytriisopropoxytitanium, ethoxytributoxytitanium, tetraisopropoxytitanium, triisopropoxybutoxytitanium, diisopropoxydibutoxytitanium, tetrabutoxytitanium, tetra(tert-butoxy)titanium, tetra(sec-butoxy)titanium, diisopropoxytitanium bis(acetylacetonate), diisopropoxytitanium bis(ethyl acetoacetate), diisobutoxytitanium bis(acetylacetonate), and diisobutoxytitanium bis(ethyl acetoacetate). In terms of catalytic activity, compound stability, and handleability, diisopropoxytitanium bis(acetylacetonate), diisopropoxytitanium bis(ethyl acetoacetate), diisobutoxytitanium bis(acetylacetonate), diisobutoxytitanium bis(ethyl acetoacetate), tetraisopropoxytitanium, tetrabutoxytitanium, tetra(tert-butoxy)titanium, and tetra(sec-butoxy)titanium are preferred. Particularly preferred are diisopropoxytitanium bis(ethyl acetoacetate), diisobutoxytitanium bis(ethyl acetoacetate), tetraisopropoxytitanium, and tetra(tert-butoxy)titanium. One titanium alkoxide may be used alone, or two or more titanium alkoxides may be used in combination.

Specific examples of the metal alkoxide (C1) other than the above titanium alkoxides include, but are not limited to, aluminum triisopropoxide, zirconium tetrapropoxide, zinc isopropoxide, sodium methoxide, potassium methoxide, lithium methoxide, magnesium ethoxide, and triethyl borate.

The metal alkoxide (C1) is particularly preferably a titanium alkoxide. The titanium alkoxide may be used alone or in combination with another metal alkoxide.

In the case where the metal alkoxide (C1) and the ammonium hydroxide (C2) are used without being reacted with each other beforehand, the amount of the metal alkoxide (C1) is preferably from 0.1 to 20 parts by weight, more preferably from 0.2 to 10 parts by weight, and particularly preferably from 0.5 to 5 parts by weight per 100 parts by weight of the total amount of the polymers (A) and (B).

### <Ammonium Hydroxide (C2)>

The ammonium hydroxide (C2) that may be contained in the curing catalyst (C) is preferably represented by the following formula (4).

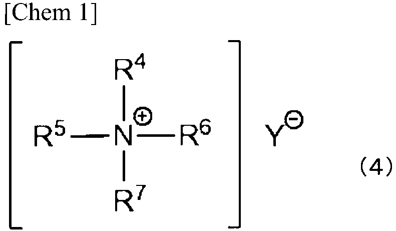

In this formula, R⁴, R⁵, R⁶, and R⁷ are the same or different and each independently a substituted or unsubstituted hydrocarbon group having 1 to 8 carbon atoms, and Y is a hydroxy group.

The substituted or unsubstituted hydrocarbon group denoted by R⁴, R⁵, R⁶, or R⁷ is preferably a substituted or unsubstituted aliphatic or aromatic hydrocarbon group and more preferably an aliphatic hydrocarbon group. The aliphatic hydrocarbon group is preferably a linear or branched alkyl group. The number of carbon atoms in the hydrocarbon group is from 1 to 8, preferably from 1 to 6, and more preferably from 1 to 4. Examples of the aliphatic hydrocarbon group include: saturated hydrocarbon groups such as methyl, ethyl, propyl, isopropyl, butyl, isobutyl, pentyl, hexyl, cyclohexyl, heptyl, and octyl groups; and unsaturated hydrocarbon groups such as vinyl, allyl, prenyl, crotyl, and cyclopentadienyl groups. Preferred are methyl, ethyl, and butyl groups.

Examples of the aromatic hydrocarbon group include phenyl, tolyl, and benzyl groups.

Examples of the substituent with which the hydrocarbon group may be substituted include methoxy, ethoxy, hydroxy, and acetoxy groups. Examples of the substituted hydrocarbon group include: alkoxyalkyl groups such as methoxymethyl, methoxyethyl, ethoxymethyl, and ethoxyethyl groups; hydroxyalkyl groups such as hydroxymethyl, hydroxyethyl, and 3-hydroxypropyl groups; and a 2-acetoxyethyl group.

Specific examples of the ammonium hydroxide (C2) represented by the formula (4) include: tetraalkylammonium hydroxides such as tetramethylammonium hydroxide, tetraethylammonium hydroxide, tetrapropylammonium hydroxide, and tetrabutylammonium hydroxide; trimethylbenzylammonium hydroxide; benzyltriethylammonium hydroxide; trimethylphenylammonium hydroxide; and tris(2-hydroxyethyl)methylammonium hydroxide. Among others, tetraalkylammonium hydroxides are preferred, and tetrabutylammonium hydroxide is more preferred.

In the case where the metal alkoxide (C1) and the ammonium hydroxide (C2) are used without being reacted with each other beforehand, the amount of the ammonium hydroxide (C2) is preferably from 0.1 to 20 parts by weight, more preferably from 0.2 to 10 parts by weight, and particularly preferably from 0.5 to 5 parts by weight per 100 parts by weight of the total amount of the polymers (A) and (B).

The ratio (C1/C2) of the metal alkoxide (C1) to the ammonium hydroxide (C2) may be, for example, from 0.1/1 to 10/1 when expressed as a molar ratio. In order to achieve good curability, the molar ratio is preferably from 1/1 to 10/1 and more preferably from 2/1 to 5/1.

### <Reaction Product of Metal Alkoxide (C1) and Ammonium Hydroxide (C2)>

The curable composition according to the present disclosure may contain the metal alkoxide (C1) and the ammonium hydroxide (C2) individually or may contain a reaction product resulting from a reaction of the metal alkoxide (C1) and the ammonium hydroxide (C2). In either case, the effect of the present invention can be achieved.

The reaction product can be obtained, for example, by allowing a mixture of the metal alkoxide (C1) and the ammonium hydroxide (C2) to react at 40 to 100°C. To be specific, the reaction temperature is preferably from 40 to 100°C. The molar ratio of the metal alkoxide (C1) to the ammonium hydroxide (C2) in the mixture may be, for example, from 0.1 to 100 and is more preferably from 0.2 to 10 and particularly preferably from 1 to 5.

The amount of the reaction product of the metal alkoxide (C1) and the ammonium hydroxide (C2) is preferably from 0.1 to 30 parts by weight, more preferably from 0.2 to 20 parts by weight, and particularly preferably from 0.5 to 10 parts by weight per 100 parts by weight of the total amount of the polymers (A) and (B).

### <<Curable Composition>>

The curable composition according to the present disclosure may contain, in addition to the reactive silicon group-containing polyoxyalkylene polymer (A), the reactive silicon group-containing (meth)acrylic ester polymer (B), and the curing catalyst (C), another polymer that is not classified as the polymer (A) or (B) to the extent that the other polymer does not affect the effect of the invention.

A specific example of the polymer that is not classified as the polymer (A) is a polyoxyalkylene polymer containing a reactive silicon group having a structure in which two or less hydrolyzable groups are bonded to one silicon atom. The amount of such a polymer is preferably from 0 to 50 wt%, even more preferably 30 wt% or less, and particularly preferably 10 wt% or less based on the amount of the polymer (A).

A specific example of the polymer that is not classified as the polymer (B) is a (meth)acrylic ester polymer containing a reactive silicon group having a structure in which one or three hydrolyzable groups are bonded to one silicon atom. The amount of such a polymer is preferably from 0 to 50 wt%, even more preferably 30 wt% or less, and particularly preferably 10 wt% or less based on the amount of the polymer (B).

The curable composition according to the present disclosure may further contain additional components, specific examples of which include another silanol condensation catalyst, a filler, an adhesion promoter, a plasticizer, a solvent, a diluent, an anti-sagging agent, an antioxidant, a light stabilizer, an ultraviolet absorber, a property modifier, a tackifying resin, an epoxy group-containing compound, a photocurable material, an oxygen-curable material, an epoxy resin, and another resin. The curable composition according to the present disclosure may further contain additives added as necessary to adjust the physical properties of the curable composition or cured product. Examples of the additives include a surface modifier, a blowing agent, a curability modifier, a flame retardant, a silicate, a radical inhibitor, a metal deactivator, an antiozonant, a phosphorus-based peroxide decomposer, a lubricant, a pigment, and a fungicide.

### <Silanol Condensation Catalyst>

In the present invention, where the metal alkoxide (C1) and the ammonium hydroxide (C2) or a reaction product of the metal alkoxide (C1) and the ammonium hydroxide (C2) is used as a silanol condensation catalyst for hydrolysis and condensation of the reactive silicon groups of the polymers (A) and (B), another silanol condensation catalyst may be additionally used.

Examples of the other silanol condensation catalyst include an organotin compound, a metal carboxylate, an amine compound, a carboxylic acid, a fluorine anion-containing compound, a photoacid generator, and a photobase generator.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, and a reaction product of dibutyltin oxide and a phthalic ester.

Specific examples of the metal carboxylate include iron 2-ethylhexanoate (divalent), iron 2-ethylhexanoate (trivalent), titanium 2-ethylhexanoate (tetravalent), vanadium 2-ethylhexanoate (trivalent), calcium 2-ethylhexanoate (divalent), potassium 2-ethylhexanoate (monovalent), barium 2-ethylhexanoate (divalent), manganese 2-ethylhexanoate (divalent), nickel 2-ethylhexanoate (divalent), cobalt 2-ethylhexanoate (divalent), zirconium 2-ethylhexanoate (tetravalent), iron neodecanoate (divalent), iron neodecanoate (trivalent), titanium neodecanoate (tetravalent), vanadium neodecanoate (trivalent), calcium neodecanoate (divalent), potassium neodecanoate (monovalent), barium neodecanoate (divalent), zirconium neodecanoate (tetravalent), iron oleate (divalent), iron oleate (trivalent), titanium oleate (tetravalent), vanadium oleate (trivalent), calcium oleate (divalent), potassium oleate (monovalent), barium oleate (divalent), manganese oleate (divalent), nickel oleate (divalent), cobalt oleate (divalent), zirconium oleate (tetravalent), iron naphthenate (divalent), and iron naphthenate (trivalent).

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-o-tolylbiguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

A fluorine anion-containing compound, a photoacid generator, or a photobase generator can also be used as the other silanol condensation catalyst.

Two or more different silanol condensation catalysts may be used in combination.

The amount of the silanol condensation catalyst used is preferably from 0.001 to 20 parts by weight, more preferably from 0.01 to 15 parts by weight, and particularly preferably from 0.01 to 10 parts by weight per 100 parts by weight of the total amount of the polymers (A) and (B).

### <Filler>

The curable composition according to the present disclosure can contain any kind of filler. Examples of the filler include ground calcium carbonate, colloidal calcium carbonate, magnesium carbonate, diatomite, clay, baked clay, talc, titanium oxide, fumed silica, precipitated silica, crystalline silica, molten silica, silicic anhydride, hydrated silicic acid, carbon black, ferric oxide, aluminum fines, zinc oxide, activated zinc oxide, PVC powder, PMMA powder, and glass fibers or filaments.

One of the fillers as mentioned above may be used alone, or a mixture of two or more thereof may be used.

The amount of the filler used is preferably from 1 to 600 parts by weight and particularly preferably from 10 to 300 parts by weight per 100 parts by weight of the total amount of the polymers (A) and (B).

Organic or inorganic balloons may be added to reduce the weight (or reduce the specific gravity) of the composition. Balloons are hollow spheres for use as a filler. Examples of the material of the balloons include inorganic materials such as glass, Shirasu, and silica and organic materials such as phenol resin, urea resin, polystyrene, and saran.

The amount of the balloons used is preferably from 0.1 to 100 parts by weight and particularly preferably from 1 to 20 parts by weight per 100 parts by weight of the total amount of the polymers (A) and (B).

### <Adhesion Promoter>

An adhesion promoter can be added to the curable composition according to the present disclosure.

The adhesion promoter added can be a silane coupling agent or a reaction product of the silane coupling agent.

Specific examples of the silane coupling agent include: amino group-containing silanes such as γ-aminopropyltrimethoxysilane, γ-aminopropylmethyldimethoxysilane, *N*-β-aminoethyl-γ-aminopropyltrimethoxysilane, *N*-β-aminoethyl-γ-aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane.

Condensation products of various silane coupling agents can also be used such as a condensation product of an aminosilane and a condensation product of an aminosilane and another alkoxysilane. Reaction products of various silane coupling agents can also be used such as a reaction product of an aminosilane and an epoxysilane and a reaction product of an aminosilane and a (meth)acrylic group-containing silane.

One of the adhesion promoters as mentioned above may be used alone, or a mixture of two or more thereof may be used.

The amount of the silane coupling agent used is preferably from 0.1 to 20 parts by weight and particularly preferably from 0.5 to 10 parts by weight per 100 parts by weight of the total amount of the polymers (A) and (B).

### <Plasticizer>

A plasticizer can be added to the curable composition according to the present disclosure. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as 1,2-cyclohexanedicarboxylic acid diisononyl ester (a specific example is a product manufactured by BASF under the trade name "Hexamoll DINCH"); aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters (a specific example is a product manufactured by LANXESS under the trade name "Mesamoll"); phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.

A polymeric plasticizer can also be used. Specific examples of the polymeric plasticizer include: vinyl polymers; polyester plasticizers; polyethers such as polyether polyols (e.g., polyethylene glycol and polypropylene glycol that have a number-average molecular weight of 500 or more) and derivatives resulting from conversion of the hydroxy groups of these polyether polyols to ester or ether groups; polystyrenes; polybutadiene; polybutene; polyisobutylene; butadiene-acrylonitrile; and polychloroprene.

The amount of the plasticizer used is preferably from 5 to 150 parts by weight, more preferably from 10 to 120 parts by weight, and particularly preferably from 20 to 100 parts by weight per 100 parts by weight of the total amount of the polymers (A) and (B). If the amount of the plasticizer is less than 5 parts by weight, the plasticizer cannot exhibit its effect. If the amount of the plasticizer is more than 150 parts by weight, the cured product lacks sufficient mechanical strength. One plasticizer may be used alone or two or more plasticizers may be used in combination.

### <Solvent and Diluent>

A solvent or diluent can be added to the curable composition according to the present disclosure. The solvent or diluent used is not limited to a particular compound and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### <Anti-Sagging Agent>

The curable composition according to the present disclosure may contain an anti-sagging agent added as necessary to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the total amount of the polymers (A) and (B).

### <Antioxidant>

An antioxidant (anti-aging agent) can be used in the curable composition according to the present disclosure. The use of the antioxidant can enhance the weathering resistance of the cured product. Examples of the antioxidant include hindered phenol antioxidants, monophenol antioxidants, bisphenol antioxidants, and polyphenol antioxidants.

Specific examples of antioxidants are mentioned in Japanese Laid-Open Patent Application Publication No. H4-283259 or Japanese Laid-Open Patent Application Publication No. H9-194731.

The amount of the antioxidant used is preferably from 0.1 to 10 parts by weight and particularly preferably from 0.2 to 5 parts by weight per 100 parts by weight of the total amount of the polymers (A) and (B).

### <Light Stabilizer>

A light stabilizer can be used in the curable composition according to the present disclosure. The use of the light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and particularly preferably from 0.2 to 5 parts by weight per 100 parts by weight of the total amount of the polymers (A) and (B).

### <Ultraviolet Absorber>

An ultraviolet absorber can be used in the curable composition according to the present disclosure. The use of the ultraviolet absorber can enhance the surface weathering resistance of the cured product. Examples of the ultraviolet absorber include benzophenone, benzotriazole, salicylate, triazine, substituted acrylonitrile, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all of which are manufactured by BASF); and SONGSORB 3290 (manufactured by SONGWON).

The amount of the ultraviolet absorber used is preferably from 0.1 to 10 parts by weight and particularly preferably from 0.2 to 5 parts by weight per 100 parts by weight of the total amount of the polymers (A) and (B).

### <Property Modifier>

The curable composition according to the present disclosure may contain a property modifier added as necessary to adjust the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present disclosure or conversely decrease the hardness and increase the elongation at break of the cured product. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and particularly preferably from 0.5 to 5 parts by weight per 100 parts by weight of the total amount of the polymers (A) and (B).

### <Tackifying Resin>

The curable composition of the present invention can contain a tackifying resin added as necessary for the purpose of enhancing the bond strength or adhesion of the curable composition to a substrate or any other purpose. The tackifying resin is not limited to a particular type and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the total amount of the polymers (A) and (B). If the amount of the tackifying resin is less than 2 parts by weight, the tackifying resin is likely to fail to exhibit the enhancing effect on the bond strength or adhesion to a substrate. If the amount of the tackifying resin is more than 100 parts by weight, the composition could have too high a viscosity and be difficult to handle.

### <Epoxy Group-Containing Compound>

An epoxy group-containing compound can be used in the curable composition according to the present disclosure. The use of the epoxy group-containing compound can enhance the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use the epoxy compound in an amount of 0.5 to 50 parts by weight per 100 parts by weight of the total amount of the polymers (A) and (B).

### <Photocurable Material>

A photocurable material can be used in the curable composition according to the present disclosure. The use of the photocurable material can lead to the formation of a coating of the photocurable material on the surface of the cured product, resulting in reduction in the stickiness of the cured product or enhancement of the weathering resistance of the cured product. Many such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

It is recommended to use the photocurable material in an amount of 0.1 to 20 parts by weight, preferably in an amount of 0.5 to 10 parts by weight, per 100 parts by weight of the total amount of the polymers (A) and (B). If the amount of the photocurable material is 0.1 parts by weight or less, the photocurable material cannot exhibit the enhancing effect on the weathering resistance. If the amount of the photocurable material is 20 parts by weight or more, the cured product tends to be extremely hard and susceptible to cracking.

### <Oxygen-Curable Material>

An oxygen-curable material can be used in the curable composition according to the present disclosure. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

It is recommended to use the oxygen-curable material in an amount of 0.1 to 20 parts by weight, more preferably in an amount of 0.5 to 10 parts by weight, per 100 parts by weight of the total amount of the polymers (A) and (B). If the amount of the oxygen-curable material is less than 0.1 parts by weight, the oxygen-curable material fails to sufficiently improve the soil resistance of the cured product. If the amount of the oxygen-curable material is more than 20 parts by weight, the cured product tends to experience a deterioration in tensile or other properties. As taught in Japanese Laid-Open Patent Application Publication No. H3-160053, it is recommended to use the oxygen-curable material in combination with a photocurable material.

### <Epoxy Resin>

An epoxy resin can also be used in the curable composition according to the present disclosure. The composition containing an added epoxy resin is preferred as an adhesive, particularly for exterior wall tiles. Examples of the epoxy resin include bisphenol A epoxy resins and novolac epoxy resins.

The proportions of the epoxy resin used and the total polymers (A) and (B) are preferably such that the weight ratio [(A) + (B)]/epoxy resin is from 100/1 to 1/100. If the ratio [(A)+(B)]/epoxy resin is less than 1/100, the cured product of the epoxy resin is less likely to achieve enhanced impact resistance or toughness. If the ratio [(A)+(B)]/epoxy resin is more than 100/1, the cured product of the polymer mixture has insufficient strength.

When the epoxy resin is added to the curable composition according to the present disclosure, a curing agent for curing the epoxy resin can also be used in the curable composition. The epoxy resin-curing agent used is not limited to a particular material and may be a commonly used epoxy resin-curing agent.

When a curing agent for curing the epoxy resin is used, the amount of the curing agent is from 0.1 to 300 parts by weight per 100 parts by weight of the epoxy resin.

### <<Preparation of Curable Composition>>

The curable composition according to the present disclosure can be prepared as a one-part composition all the components of which are blended together and hermetically stored and which, when applied to any object, cures under the action of moisture in the air. The curable composition may be prepared as a two-part composition consisting of a polymer composition and a curing agent blend which is prepared separately from the polymer composition by blending components such as a curing catalyst, a filler, a plasticizer, and water. In the case of this two-part composition, the polymer composition and the curing agent blend are mixed before use. In terms of workability, it is preferable to prepare the curable composition as a one-part composition.

In the case where the curable composition is a one-part composition, all the components are blended together beforehand. Thus, it is preferable that a water-containing component be dried to remove water before use or dehydrated by means such as pressure reduction during blending or kneading. The storage stability of the curable composition can be further improved by not only performing the drying/dehydration but also adding an alkoxysilane compound such as methyltrimethoxysilane, phenyltrimethoxysilane, n-propyltrimethoxysilane, vinyltrimethoxysilane, phenyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

A partially-condensed silane compound such as Dynasylan 6490 of Evonik can also be used as a dehydrating agent. Such a compound is preferred in terms of safety and stability.

The amount of the dehydrating agent used, in particular the silicon compound such as vinyltrimethoxysilane reactive with water, is preferably from 0.1 to 20 parts by weight and more preferably from 0.5 to 10 parts by weight per 100 parts by weight of the total amount of the polymers (A) and (B).

### <<Applications>>

The curable composition according to the present disclosure has diverse applications and can be used as: a pressure-sensitive adhesive; a sealing material for buildings, ships, automobiles, or roads; an adhesive; a waterproofing material; a coating-waterproofing material; a mold making material; a vibration-isolating material; a vibration-damping material; a soundproofing material; a foam material; a paint; a spray material; a material for use in an electrical or electronic part, such as a sealant for the back side of a solar cell; an electrical insulating material for an electrical or electronic part or device, such as an insulating sheath material for an electric wire or a cable; an acoustic insulating material; an elastic adhesive; a binder; a contact adhesive; a spray-type sealing material; a crack-repairing material; an adhesive for tile laying; an adhesive for an asphalt-waterproofing material; a powder paint; a cast molding material; a rubber material for medical purposes; a pressure-sensitive adhesive for medical purposes; a pressure-sensitive adhesive sheet for medical purposes; a medical device sealing material; a dental impression material; a food packaging material; a joint sealing material for exterior cladding such as siding board; a coating material; an anti-skid covering material; a buffer material; a primer; an electrically conductive material for electromagnetic wave shielding; a thermally conductive material; a hot-melt material; a potting agent for electrical or electronic purposes; a film; a gasket; a concrete-reinforcing material; an adhesive for temporary bonding; any kind of molding material; a rust-proofing or waterproofing sealant for an edge face (cut edge) of wire glass or laminated glass; or a liquid sealing material for use in industrial parts such as parts of automobiles, large vehicles (e.g., cargo trucks and buses), railroad cars, aircrafts, ships, electric machines, and various other machines. The curable composition can be used also as a pressure-sensitive adhesive material such as a pressure-sensitive adhesive tape or sheet.

In the following items, preferred aspects of the present disclosure are listed. The present invention is not limited to the following items.

### [Item 1]

A curable composition containing:
a polyoxyalkylene polymer (A) having a reactive silicon group;
a (meth)acrylic ester polymer (B) having a reactive silicon group; and
a curing catalyst (C), wherein
the reactive silicon group of the polymer (A) has a structure in which three hydrolyzable groups are bonded to one silicon atom, the structure being represented by the following formula (1): -SiX₃ (1), wherein X groups are each independently a hydrolyzable group,
the reactive silicon group of the polymer (B) has a structure in which two hydrolyzable groups are bonded to one silicon atom, the structure being represented by the following formula (2): -SiR²Z₂ (2), wherein R² is a hydrocarbon group having 1 to 20 carbon atoms, the hydrocarbon group optionally has a heteroatom-containing group, and Z groups are each independently a hydrolyzable group, and
the curing catalyst (C) contains a metal alkoxide (C1) and an ammonium hydroxide (C2) or contains a reaction product of the metal alkoxide (C1) and the ammonium hydroxide (C2).

### [Item 2]

The curable composition according to item 1, wherein the metal alkoxide (C1) is an alkoxide of at least one metal selected from the group consisting of titanium, aluminum, zirconium, zinc, sodium, potassium, lithium, magnesium, and boron.

### [Item 3]

The curable composition according to item 1 or 2, wherein the metal alkoxide (C1) is a titanium alkoxide.

### [Item 4]

The curable composition according to any one of items 1 to 3, wherein
the reactive silicon group of the polymer (A) is a trialkoxysilyl group,
the reactive silicon group of the polymer (B) is a dialkoxysilyl group, and
alkoxy groups of the polymer (A) and alkoxy groups of the polymer (B) are the same alkoxy groups.

### [Item 5]

The curable composition according to any one of claims 1 to 4, wherein a weight ratio of the polymer (A) to the polymer (B) is from 95:5 to 5:95.

### [Item 6]

The curable composition according to any one of claims 1 to 5, wherein a weight ratio of the polymer (A) to the polymer (B) is from 80:20 to 60:40.

### [Item 7]

A cured product resulting from curing of the curable composition according to any one of claims 1 to 6.

### Examples

Hereinafter, the present invention will be specifically described using examples. The examples given below are not intended to limit the present invention.

The number-average molecular weights mentioned in the examples are GPC molecular weights measured under the following conditions.
Delivery system: HLC-8220 GPC manufactured by Tosoh Corporation
Column: TSKgel SuperH series manufactured by Tosoh Corporation
Solvent: THF
Molecular weight: Polystyrene equivalent
Measurement temperature: 40°C

In the examples, the values of the average number of reactive silicon groups per polymer end and the average number of reactive silicon groups per polymer molecule were calculated based on the structures of the polymers and NMR measurement results.

### (Synthesis Example 1)

Propylene oxide was polymerized using polyoxypropylene glycol having a number-average molecular weight of about 4500 as an initiator in the presence of a zinc hexacyanocobaltate-glyme complex catalyst. This polymerization yielded hydroxy-terminated polyoxypropylene (P-1) having a number-average molecular weight of 14500 and a dispersity Mw/Mn of 1.15.

To the obtained hydroxy-terminated polyoxypropylene (P-1) was added a 28% methanol solution of sodium methoxide the amount of which was 1.2 molar equivalents per molar equivalent of the hydroxy groups of the polyoxypropylene (P-1). Methanol was distilled off by evaporation under vacuum, and then 1.5 molar equivalents of allyl chloride was added per molar equivalent of the hydroxy groups of the polymer (P-1) to convert the terminal hydroxy groups to allyl groups. Allyl chloride remaining unreacted was removed by evaporation under reduced pressure. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, allyl-terminated polyoxypropylene (Q-1) was obtained.

To 500 g of the polymer (Q-1) was added 50 µl of a solution of platinum-divinyldisiloxane complex (isopropanol solution with a platinum concentration of 3 wt%), and 9.8 g of trimethoxysilane was slowly added dropwise under stirring. The reaction was allowed to proceed at 100°C for 2 hours, after which trimethoxysilane remaining unreacted was distilled off under reduced pressure to obtain trimethoxysilyl-terminated polyoxypropylene (A-1) having a number-average molecular weight of about 15800. The polymer (A-1) was found to have 0.8 trimethoxysilyl groups on average per end and have 1.6 trimethoxysilyl groups on average per molecule.

### (Synthesis Example 2)

Propylene oxide was polymerized using polyoxypropylene glycol having a number-average molecular weight of about 4500 as an initiator in the presence of a zinc hexacyanocobaltate-glyme complex catalyst. This polymerization yielded polyoxypropylene (P-2) terminated at both ends by hydroxy groups and having a number-average molecular weight of 27,900 (end group-equivalent molecular weight = 17,700) and a dispersity Mw/Mn of 1.21.

To the obtained hydroxy-terminated polyoxypropylene (P-2) was added a 28% methanol solution of sodium methoxide the amount of which was 1.0 molar equivalents per molar equivalent of the hydroxy groups of the polyoxypropylene (P-2). Methanol was distilled off by evaporation under vacuum, and then 1.79 molar equivalents of allyl chloride was added per molar equivalent of the hydroxy groups of the hydroxy-terminated polyoxypropylene to convert the terminal hydroxy groups to allyl groups. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, allyl-terminated polyoxypropylene (Q-2) was obtained.

To 500 g of the polymer (Q-2) was added 50 µl of a solution of platinum-divinyldisiloxane complex (isopropanol solution with a platinum concentration of 3 wt%), and 7.5 g of trimethoxysilane was slowly added dropwise under stirring. The liquid mixture was allowed to react at 90°C for 2 hours, after which trimethoxysilane remaining unreacted was distilled off under reduced pressure to obtain trimethoxysilyl-terminated polyoxypropylene (A-2) having a number-average molecular weight of 28,500. The polymer (A-2) was found to have 0.8 trimethoxysilyl groups on average per end and have 1.6 trimethoxysilyl groups on average per molecule.

### (Synthesis Example 3)

Propylene oxide was polymerized using polyoxypropylene triol having a number-average molecular weight of about 4500 as an initiator in the presence of a zinc hexacyanocobaltate-glyme complex catalyst. This polymerization yielded hydroxy-terminated polyoxypropylene (P-3) having a number-average molecular weight of 16400 (end group-equivalent molecular weight = 12200) and a dispersity Mw/Mn of 1.31.

To the obtained hydroxy-terminated polyoxypropylene (P-3) was added a 28% methanol solution of sodium methoxide the amount of which was 1.2 molar equivalents per molar equivalent of the hydroxy groups of the polyoxypropylene (P-3). Methanol was distilled off by evaporation under vacuum, and then 1.5 molar equivalents of allyl chloride was added per molar equivalent of the hydroxy groups of the polymer (P-3) to convert the terminal hydroxy groups to allyl groups. Allyl chloride remaining unreacted was removed by evaporation under reduced pressure. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, allyl-terminated polyoxypropylene (Q-3) was obtained.

To 500 g of the polymer (Q-3) was added 50 µl of a solution of platinum-divinyldisiloxane complex (isopropanol solution with a platinum concentration of 3 wt%), and 11.2 g of trimethoxysilane was slowly added dropwise under stirring. The reaction was allowed to proceed at 100°C for 2 hours, after which trimethoxysilane remaining unreacted was distilled off under reduced pressure to obtain trimethoxysilyl-terminated polyoxypropylene (A-3) having a number-average molecular weight of about 16400. The polymer (A-3) was found to have 0.7 trimethoxysilyl groups on average per end and have 2.2 trimethoxysilyl groups on average per molecule.

### (Synthesis Example 4)

Propylene oxide was polymerized using polyoxypropylene glycol having a number-average molecular weight of about 3,000 as an initiator in the presence of a zinc hexacyanocobaltate-glyme complex catalyst. This polymerization yielded polyoxypropylene (P-4) terminated at both ends by hydroxy groups and having a number-average molecular weight of 27,900 (end group-equivalent molecular weight = 17700) and a dispersity Mw/Mn of 1.21.

To the obtained polymer (P-4) was added a 28% methanol solution of sodium methoxide the amount of which was 1.0 molar equivalents per molar equivalent of the hydroxy groups of the polymer (P-4). Methanol was distilled off by evaporation under vacuum, then 1.0 molar equivalents of allyl glycidyl ether was added per molar equivalent of the hydroxy groups of the polymer (P-4), and the reaction was allowed to proceed at 130°C for 2 hours. After that, a methanol solution of 0.3 molar equivalents of sodium methoxide was added, then methanol was removed, and 1.8 molar equivalents of allyl chloride was added to convert the terminal hydroxy groups to allyl groups. To the resulting unpurified polyoxypropylene were added n-hexane and water, and the mixture was stirred and then centrifuged to remove water. Hexane was evaporated from the resulting hexane solution under reduced pressure, and thus the metal salt was removed from the polymer. In this manner, polyoxypropylene (Q-4) having a plurality of unsaturated carbon-carbon bonds at a polymer end was obtained.

To 500 g of the polymer (Q-4) was added 50 µl of a solution of platinum-divinyldisiloxane complex (isopropanol solution with a platinum concentration of 3 wt%), and 9.6 g of trimethoxysilane was slowly added dropwise under stirring. The liquid mixture was allowed to react at 90°C for 2 hours, after which trimethoxysilane remaining unreacted was distilled off under reduced pressure to obtain polyoxypropylene (A-4) having a plurality of trimethoxysilyl groups at a polymer end and having a number-average molecular weight of 28,000. The polymer (A-4) was found to have 1.7 trimethoxysilyl groups on average per end and have 3.4 trimethoxysilyl groups on average per molecule.

### (Synthesis Example 5)

Propylene oxide was polymerized using an initiator in the presence of a zinc hexacyanocobaltate-glyme complex catalyst. The initiator was a mixture of 60 wt% of polyoxypropylene glycol having a number-average molecular weight of about 4500 and 40 wt% of polyoxypropylene triol having a number-average molecular weight of about 4500. This polymerization yielded hydroxy-terminated polyoxypropylene (P-5) having a number-average molecular weight of 19000 and a dispersity of Mw/Mn of 1.28.

To 500 g of the obtained hydroxy-terminated polyoxypropylene (P-5) was added 15 µl of a solution of bismuth complex in 2-ethylhexanoic acid (2-ethylhexanoic acid solution with a bismuth concentration of 25 wt%), and 17.5 g of isocyanatopropyltrimethoxysilane was slowly added dropwise under stirring. The reaction was allowed to proceed at 90°C for 2 hours, after which isocyanatopropyltrimethoxysilane remaining unreacted was distilled off under reduced pressure to obtain trimethoxysilyl-terminated polyoxypropylene (A-5) having a number-average molecular weight of about 19500. The polymer (A-5) was found to have 1.0 trimethoxysilyl groups on average per end and have 2.4 trimethoxysilyl groups on average per molecule.

### (Synthesis Example 6)

To 412 g of isobutyl alcohol (IBA) heated to 105°C was added dropwise over 5 hours a solution which was prepared by dissolving 24.8 g of azobis-2-methylbutyronitrile as a polymerization initiator in a mixture composed of 670 g of methyl methacrylate, 60 g of butyl acrylate, 134 g of stearyl methacrylate, 55 g of γ-methacryloxypropyldimethoxymethylsilane, 73 g of γ-mercaptopropyldimethoxymethylsilane, and 223 g of IBA. After that, a solution prepared by dissolving 2.8 g of azobis-2-methylbutyronitrile as a polymerization initiator in 45 g of IBA was further added dropwise over 1 hour. The dropwise addition was followed by 2-hour post-polymerization to obtain a (meth)acrylic ester copolymer (B-1) having a solids concentration of 60%, having a number-average molecular weight of 2100, and having 1.3 dimethoxymethylsilyl groups on average per molecule.

### (Synthesis Example 7)

To 200 g of isobutyl alcohol (IBA) heated to 105°C was added dropwise over 5 hours a solution which was prepared by dissolving 11.5 g of azobis-2-methylbutyronitrile as a polymerization initiator in a mixture composed of 300 g of methyl methacrylate, 115 g of 2-ethylhexyl acrylate, 43 g of γ-methacryloxypropyldimethoxymethylsilane, 34 g of γ-mercaptopropyldimethoxymethylsilane, and 140 g of IBA. The dropwise addition was followed by 2-hour post-polymerization to obtain a (meth)acrylic ester copolymer (B-2) having a solids concentration of 60%, having a number-average molecular weight of 2200, and having 1.5 dimethoxymethylsilyl groups on average per molecule.

### (Synthesis Example 8)

To 200 g of isobutyl alcohol (IBA) heated to 105°C was added dropwise over 5 hours a solution which was prepared by dissolving 11.5 g of azobis-2-methylbutyronitrile as a polymerization initiator in a mixture composed of 300 g of methyl methacrylate, 115 g of 2-ethylhexyl acrylate, 46 g of γ-methacryloxypropyltrimethoxysilane, 37 g of γ-mercaptopropyltrimethoxysilane, and 140 g of IBA. The dropwise addition was followed by 2-hour post-polymerization to obtain a (meth)acrylic ester copolymer (B'-1) having a solids concentration of 60%, having a number-average molecular weight of 2200, and having 1.5 trimethoxysilyl groups on average per molecule.

### (Synthesis Example 9) Catalyst (C-1)

A 500-mL four-necked round-bottom flask fitted with a nitrogen inlet tube was charged with 85.2 g (0.3 mol) of tetraisopropoxytitanium (manufactured by Tokyo Chemical Industry Co., Ltd.), and 70 g (0.1 mol) of a 37% methanol solution (manufactured by Tokyo Chemical Industry Co., Ltd.) of tetrabutylammonium hydroxide (hereinafter referred to as "TBAH") was added dropwise under stirring at an internal temperature of 60°C over 30 minutes, after which the stirring was continued for 1 hour. Subsequently, the contents of the flask were concentrated under reduced pressure (final reduced pressure = 10 mmHg) to distill off isopropanol and methanol to obtain 80 g of a reaction product, to which 25 g of isopropanol was added. Thus, 105 g of a catalyst (C-1) was obtained as a transparent liquid.

### (Example 1)

To 70 parts by weight of the polymer (A-1) obtained in Synthesis Example 1 were added 30 parts by weight of the polymer (B-1) obtained in Synthesis Example 6, 50 parts by weight of PPG 2000 (manufactured by Mitsui Fine Chemicals, Inc.), and 250 parts by weight of Carbital 110S (ground calcium carbonate manufactured by IMERYS Carbonates), and these components were mixed and uniformly dispersed. After that, 5 parts by weight of Dynasylan VTMO (vinyltrimethoxysilane manufactured by EVONIK), 4 parts by weight of Dynasylan AMMO (3-aminopropyltrimethoxysilane manufactured by EVONIK), and 3 parts by weight of the catalyst (C-1) obtained in Synthesis Example 9 were added, and the mixture was homogenized and defoamed by means of a planetary mixer. The resulting curable composition was used to perform skinning time measurement, viscosity measurement, and examination of the smoothness of the liquid surface of the applied composition in ways described below. The results are listed in Table 1.

### (Skinning Time)

An about 5-mm-thick mold was filled with the obtained curable composition by means of a spatula at a temperature of 23°C and a relative humidity of 50%, and the surface of the curable composition was flattened. The moment at which the surface flattening was completed was defined as a curing start point. The time taken for the composition to become non-sticky to the spatula touching the surface of the composition was determined as the skinning time.

### (Viscosity)

The obtained curable composition was aged at a temperature of 23°C and a relative humidity of 50% RH for 7 days after the preparation of the composition. After the aging, the viscosity at 10 rpm of the composition was measured by means of a BS-type viscometer manufactured by Toki Sangyo Co., Ltd. and a rotor No. 7.

### (Smoothness of Surface of Composition)

An about 5-mm-thick mold was filled with the obtained curable composition by means of a spatula at a temperature of 23°C and a relative humidity of 50%, and an excess of the composition was scraped off the mold. The surface of the composition was visually inspected to determine whether the surface was smooth or rough (to check for the formation of gels).

### (Comparative Example 1)

Evaluation procedures were performed in the same manner as in Example 1, except that the polymer (B-1) was replaced by the polymer (B'-1). The results are listed in Table 1.

### (Example 2)

Evaluation procedures were performed in the same manner as in Example 1, except that the polymer (A-1) was replaced by the polymer (A-2). The results are listed in Table 1.

### (Comparative Example 2)

Evaluation procedures were performed in the same manner as in Example 2, except that the polymer (B-1) was replaced by the polymer (B'-1). The results are listed in Table 1.

### (Example 3)

Evaluation procedures were performed in the same manner as in Example 1, except that the polymer (A-1) was replaced by the polymer (A-3). The results are listed in Table 1.

### (Comparative Example 3)

Evaluation procedures were performed in the same manner as in Example 3, except that the polymer (B-1) was replaced by the polymer (B'-1). The results are listed in Table 1.

### (Example 4)

Evaluation procedures were performed in the same manner as in Example 1, except that the polymer (A-1) was replaced by the polymer (A-4). The results are listed in Table 1.

### (Comparative Example 4)

Evaluation procedures were performed in the same manner as in Example 4, except that the polymer (B-1) was replaced by the polymer (B'-1). The results are listed in Table 1.

### (Example 5)

Evaluation procedures were performed in the same manner as in Example 1, except that the polymer (A-1) was replaced by the polymer (A-5). The results are listed in Table 1.

### (Comparative Example 5)

Evaluation procedures were performed in the same manner as in Example 5, except that the polymer (B-1) was replaced by the polymer (B'-1). The results are listed in Table 1.

### (Example 6)

Evaluation procedures were performed in the same manner as in Example 1, except that the amount of the polymer (A-1) was changed to 80 parts by weight and the amount of the polymer (B-1) was changed to 20 parts by weight. The results are listed in Table 1.

### (Example 7)

Evaluation procedures were performed in the same manner as in Example 1, except that the amount of the polymer (A-1) was changed to 60 parts by weight and the amount of the polymer (B-1) was changed to 40 parts by weight. The results are listed in Table 1.

### (Example 8)

Evaluation procedures were performed in the same manner as in Example 1, except that the polymer (B-1) was replaced by the polymer (B-2). The results are listed in Table 1.

### (Example 9)

Evaluation procedures were performed in the same manner as in Example 1, except that 1 part by weight of Tinuvin 770 (hindered amine light stabilizer manufactured by BASF Japan Ltd.), 1 part by weight of Tinuvin 326 (benzotriazole ultraviolet absorber manufactured by BASF Japan Ltd.), and 1.2 parts by weight of Irganox 245 (hindered phenol antioxidant manufactured by BASF) were added. The results are listed in Table 1.

### (Comparative Example 6)

Evaluation procedures were performed in the same manner as in Comparative Example 1, except that 1 part by weight of Tinuvin 770 (hindered amine light stabilizer manufactured by BASF Japan Ltd.), 1 part by weight of Tinuvin 326 (benzotriazole ultraviolet absorber manufactured by BASF Japan Ltd.), and 1.2 parts by weight of Irganox 245 (hindered phenol antioxidant manufactured by BASF) were added. The results are listed in Table 1.

### (Reference Example 1)

Evaluation procedures were performed in the same manner as in Example 1, except that 3 parts by weight of the catalyst (C-1) was replaced by 0.2 parts by weight of Neostann S-1 which is a tin catalyst (dioctyltin bis(triethoxysilicate) manufactured by Nitto Kasei Co., Ltd.). The results are listed in Table 1.

### (Reference Example 2)

Evaluation procedures were performed in the same manner as in Comparative Example 1, except that 3 parts by weight of the catalyst (C-1) was replaced by 0.2 parts by weight of Neostann S-1 which is a tin catalyst. The results are listed in Table 1.

| | | Ex. 1 | Comp. 1 | Ex. 2 | Comp. 2 | Ex. 3 | Comp. 3 | Ex. 4 | Comp. 4 | Ex. 5 | Comp. 5 | Ex. 6 | Ex. 7 | Ex. 8 | Ex. 9 | Comp. 6 | Ref. 1 | Ref. 2 |
|---|---|---|---|---|---|---|---|---|---|---|---|---|---|---|---|---|---|---|
| Polymer (A) | A-1 | 70 | 70 | | | | | | | | | 80 | 60 | 70 | 70 | 70 | 70 | 70 |
| | A-2 | | | 70 | 70 | | | | | | | | | | | | | |
| | A-3 | | | | | 70 | 70 | | | | | | | | | | | |
| | A-4 | | | | | | | 70 | 70 | | | | | | | | | |
| | A-5 | | | | | | | | | 70 | 70 | | | | | | | |
| Polymer (B) | B-1 | 30 | | 30 | | 30 | | 30 | | 30 | | 20 | 40 | | 30 | | 30 | |
| | B-2 | | | | | | | | | | | | | 30 | | | | |
| | B-1 | | 30 | | 30 | | 30 | | 30 | | 30 | | | | | 30 | | 30 |
| Plasticizer | PPG 2000 | 50 | 50 | 50 | 50 | 50 | 50 | 50 | 50 | 50 | 50 | 50 | 50 | 50 | 50 | 50 | 50 | 50 |
| Filler | Carbital 110S | 250 | 250 | 250 | 250 | 250 | 250 | 250 | 250 | 250 | 250 | 250 | 250 | 250 | 250 | 250 | 250 | 250 |
| Ultraviolet absorber | Tinuvin 770 | | | | | | | | | | | | | | 1 | 1 | | |
| | Tinuvin 326 | | | | | | | | | | | | | | 1 | 1 | | |
| Antioxidant | Irganox 245 | | | | | | | | | | | | | | 1.2 | 1.2 | | |
| Dehydrating agent | Dynasylan VTMO | 5 | 5 | 5 | 5 | 5 | 5 | 5 | 5 | 5 | 5 | 5 | 5 | 5 | 5 | 5 | 5 | 5 |
| Adhesion promoter | Dynasylan AMMO | 4 | 4 | 4 | 4 | 4 | 4 | 4 | 4 | 4 | 4 | 4 | 4 | 4 | 4 | 4 | 4 | 4 |
| Curing catalyst | Catalyst (C-1) | 3 | 3 | 3 | 3 | 3 | 3 | 3 | 3 | 3 | 3 | 3 | 3 | 3 | 3 | 3 | | |
| | Neostann S-1 | | | | | | | | | | | | | | | | 0.2 | 0.2 |
| Skinning time (min) | 23°C, 50% RH | 52 | 175 | 80 | 95 | 28 | 60 | 22 | 53 | 3 | 9 | 55 | 54 | 50 | 53 | 93 | 37 | 27 |
| Viscosity (Pa•s) | 23°C, 50% RH, 10rpm | 307 | 436 | 849 | 1948 | 387 | 904 | 778 | 1519 | 460 | 654 | 286 | 305 | 215 | 315 | 357 | 107 | 152 |
| Smoothness of surface of composition | | Smooth | Rough | Smooth | Rough | Smooth | Rough | Smooth | Rough | Smooth | Rough | Smooth | Smooth | Smooth | Smooth | Rough | Smooth | Smooth |

Table 1 reveals the following findings. In Example 1 where the composition contained the polyoxyalkylene polymer (A) having a silicon atom bonded to three hydrolyzable groups, the (meth)acrylic ester polymer (B) having a silicon atom bonded to two hydrolyzable groups, and the curing catalyst (C) containing a reaction product of a metal alkoxide and an ammonium hydroxide, the skinning time was shorter than in Comparative Example 1 where the composition contained a (meth)acrylic ester polymer having a silicon atom bonded to three hydrolyzable groups instead of the polymer (B). It is also seen that in Example 1, the liquid surface of the applied composition was free of gels and smooth. In all the cases where the liquid surface of the applied composition was smooth, the surface of the composition remained free of gels even after curing of the composition.

It is also seen that the time-dependent increase in viscosity after 1 week was smaller in Example 1 than in Comparative Example 1; this means that the composition of Example 1 was superior in handleability to the composition of Comparative Example 1.

In summary, the composition of Example 1 cured faster than the composition of Comparative Example 1, and at the same time was less affected by the formation of gels or the time-dependent viscosity increase than the composition of Comparative Example 1.

The same is true of the comparison of Example 2 and Comparative Example 2, the comparison of Example 3 and Comparative Example 3, the comparison of Example 4 and Comparative Example 4, the comparison of Example 5 and Comparative Example 5, and the comparison of Example 9 and Comparative Example 6.

Reference Examples 1 and 2 relate to systems in which a tin catalyst is used as a curing catalyst. The skinning time was longer in Reference Example 1 where the (meth)acrylic ester polymer (B) having a silicon atom bonded to two hydrolyzable groups was used than in Reference Example 2 where a (meth)acrylic ester polymer having a silicon atom bonded to three hydrolyzable groups was used, which means that the curability of the composition was lower in Reference Example 1 than in Reference Example 2. This result demonstrates that the curing-accelerating effect as illustrated by the comparison of Examples and Comparative Examples cannot be observed in any system in which a tin catalyst is used as a curing catalyst, but is specific to a system in which a metal alkoxide and an ammonium hydroxide are used.

## Claims

1. A curable composition comprising:
a polyoxyalkylene polymer (A) having a reactive silicon group;
a (meth)acrylic ester polymer (B) having a reactive silicon group; and
a curing catalyst (C), wherein
the reactive silicon group of the polymer (A) has a structure in which three hydrolyzable groups are bonded to one silicon atom, the structure being represented by the following formula (1): -SiX₃ (1), wherein X groups are each independently a hydrolyzable group,
the reactive silicon group of the polymer (B) has a structure in which two hydrolyzable groups are bonded to one silicon atom, the structure being represented by the following formula (2): -SiR²Z₂ (2), wherein R² is a hydrocarbon group having 1 to 20 carbon atoms, the hydrocarbon group optionally has a heteroatom-containing group, and Z groups are each independently a hydrolyzable group, and
the curing catalyst (C) comprises a metal alkoxide (C1) and an ammonium hydroxide (C2) or comprises a reaction product of the metal alkoxide (C1) and the ammonium hydroxide (C2).

2. The curable composition according to claim 1, wherein the metal alkoxide (C1) is an alkoxide of at least one metal selected from the group consisting of titanium, aluminum, zirconium, zinc, sodium, potassium, lithium, magnesium, and boron.

3. The curable composition according to claim 1, wherein the metal alkoxide (C1) is a titanium alkoxide.

4. The curable composition according to claim 1 or 2, wherein
the reactive silicon group of the polymer (A) is a trialkoxysilyl group,
the reactive silicon group of the polymer (B) is a dialkoxysilyl group, and
alkoxy groups of the polymer (A) and alkoxy groups of the polymer (B) are the same alkoxy groups.

5. The curable composition according to claim 1 or 2, wherein a weight ratio of the polymer (A) to the polymer (B) is from 95:5 to 5:95.

6. The curable composition according to claim 1 or 2, wherein a weight ratio of the polymer (A) to the polymer (B) is from 80:20 to 60:40.

7. A cured product resulting from curing of the curable composition according to claim 1 or 2.
